# EUROPÄISCHE PATENTSCHRIFT

(11) **EP 0 978 478 B1**
(45) Veröffentlichungstag und Bekanntmachung des Hinweises auf die Patenterteilung: **27.03.2002**
(21) Anmeldenummer: 99114236.5
(22) Anmeldetag: 27.07.1999
(51) Int. Cl.: C01B 17/45, A61L 2/20

(54) **Reinigung von Sulfurylfluorid**
Purification of Sulphuryl Fluoride
Purfication de Fluorure de Sulfuryl

(30) Priorität: 01.08.1998 DE 19834882
(43) Veröffentlichungstag der Anmeldung: 09.02.2000
(73) Patentinhaber: Solvay Fluor und Derivate GmbH, 30173 Hannover (DE)
(72) Erfinder: Schulz, Alf, 30900 Wedemark (DE); Rieland, Mathias, 30539 Hannover (DE); Zipfel, Lothar, 30880 Laatzen (DE); Born, Thomas, 31188 Holle (DE); Hausmann, Eckhard, 30519 Hannover (DE)
(74) Vertreter: Gosmann, Martin

(56) Entgegenhaltungen:
- DE-A- 4 441 628
- DE-A- 19 621 516
- DE-C- 4 343 689

## Beschreibung

Die Erfindung bezieht sich auf die Reinigung von Sulfurylfluorid.

Sulfurylfluorid (SO₂F₂) kann als Schädlingsbekämpfungmittel verwendet werden. Seine Herstellung erfolgt beispielsweise durch die Umsetzung von Schwefeldioxid, Chlor bzw. Sulfurylchlorid und Fluorwasserstoff über einem Katalysator, beispielsweise einem Alkalibifluorid auf Aktivkohle, siehe DE-B 1 208 296. Die Reinigung des Rohproduktes, welches noch Fluorwasserstoff, Chorwasserstoff, Schwefeldioxid, Chlor und Sulfurylchlorfluorid enthält, erfolgte mittels Wasser in zwei hintereinander geschalteten Wäschern.

Aufgabe der vorliegenden Erfindung ist es, ein Verfahren anzugeben, mit welchem Sulfurylfluorid effektiver gereinigt werden kann. Diese Aufgabe wird durch das in den Ansprüchen angegebenen Verfahren gelöst.

Das erfindungsgemäße Verfahren sieht vor, daß man Sulfurylfluorid durch Kontaktieren mit Wasserstoffperoxid oder einem Vorläufer davon reinigt.

Unter "Vorläufer von Wasserstoffperoxid" werden solche Verbindungen verstanden, die Wasserstoffperoxid freisetzen, insbesondere in Form einer wäßrigen Lösung. Brauchbar sind auch Vorläufer, die nicht zu basisch reagieren (Gefahr der Zersetzung des SO₂F₂), beispielsweise Perborate oder Percarbonate, vorzugsweise der Natriumsalze. Bevorzugt kontaktiert man mit Wasserstoffperoxid, welches zweckmäßig in Form einer wäßrigen Lösung vorliegt.

Die Konzentration an Wasserstoffperoxid bzw. des Vorläufers davon liegt vorteilhaft im Bereich von 0,1 bis 10 Gew.-% der wäßrigen Lösung.

Das Kontaktieren des zu reinigenden Sulfurylfluorids mit der Reinigungslösung wird zweckmäßig im Temperaturbereich von 0 bis 40 °C durchgeführt.

Das erfindungsgemäße Reinigungsverfahren kann unmittelbar im Anschluß an die Herstellung des SO₂F₂ durchgeführt werden. Alternativ kann das erfindungsgemäße Reinigungsverfahren im zeitlichen Zusammenhang mit der Anwendung erfolgen. Beispielsweise kann man noch nicht oder nur teilweise gereinigtes SO₂F₂ unmittelbar vor der Anwendung, z. B. als Schädlingsbekämpfungsmittel, erfindungsgemäß reinigen. Selbstverständlich kann man das erfindungsgemäße Reinigungsverfahren auch irgendwann zwischen Herstellung und Anwendung des SO₂F₂ durchführen.

Das erfindungsgemäße Verfahren kann besonders zur Reinigung von Sulfurylfluorid verwendet werden, welches Chlor, Fluor und/oder Schwefeldioxid enthält. Es ist auch wirksam, wenn zusätzlich Säuren wie Fluorwasserstoff oder Salzsäure enthalten sind.

Der Vorteil des erfindungsgemäßen Verfahrens liegt unter anderem darin, daß die Reinigung schnell und effektiv durchgeführt werden kann. Das Sulfurylfluorid wird dabei nicht angegriffen.

Das erfindungsgemäße hergestellte Sulfurylfluorid ist im wesentlichen frei von Schwefeldioxid und Chlor und kann deshalb besonders gut als Schädlingsbekämpfungsmittel verwendet werden. Vor seinem Einsatz ist eine weitere Reinigung nicht notwendig. Aufgrund seiner Reinheit sind keine schädlichen Einflüsse auf empfindliche Materialien bei seiner Anwendung zu befürchten.

Das folgende Beispiel soll die Erfindung weiter erläutern, ohne sie in ihrem Umfang einzuschränken.

### Beispiel: Reinigung von SO₂F₂ mit H₂O₂

SO₂F₂-Rohgas mit 0,5 % SO₂ (Flächenprozent bei Gaschromatographie-Messung) wurde bei Umgebungstemperatur durch einen Wäscher geleitet, der eine wäßrige H₂O₂-Lösung (H₂O₂-Konzentration: 8 Gew.-% enthielt). Das den Wäscher verlassende SO₂F₂ enthält weniger als 0,05 % (GC-Messung) an SO₂.

## Patentansprüche

1. Verfahren zur Herstellung von gereinigtem Sulfurylfluorid (SO₂F₂), wobei man das zu reinigende Sulfurylfluorid mit Wasserstoffperoxid oder einem Vorläufer davon kontaktiert.

2. Verfahren nach Anspruch 1, **dadurch gekennzeichnet, daß** man mit wäßriger Lösung von Wasserstoffperoxid kontaktiert.

3. Verfahren nach Anspruch 1 oder 2, **dadurch gekennzeichnet daß** man Wasserstoffperoxid oder einen Vorläufer davon in wäßriger Lösung einsetzt und die Konzentration im Bereich von 0,1 bis 10 Gew.-% liegt.

4. Verfahren nach Anspruch 1, **dadurch gekennzeichnet, daß** man das Kontaktieren des Sulfurylfluorids und des Wasserstoffperoxids oder des Vorläufers davon bei einer Temperatur von 0 bis +40°C durchführt.

5. Verfahren nach Anspruch 1, **dadurch gekennzeichnet, daß** man Sulfurylfluorid reinigt, welches Schwefeldioxid (SO₂) und/oder elementares Fluor und/oder Chlor enthält.

6. Verfahren nach Anspruch 1, **dadurch gekennzeichnet, daß** man Sulfurylfluorid reinigt, welches zusätzlich HF und/oder HCl enthält.

## Claims

1. A process for the preparation of purified sulphuryl fluoride (SO₂F₂), wherein the sulphuryl fluoride to be purified is contacted with hydrogen peroxide or a precursor thereof.

2. A process according to Claim 1, **characterised in that** contacting is effected with an aqueous solution of hydrogen peroxide.

3. A process according to Claim 1 or 2, **characterised in that** hydrogen peroxide or a precursor thereof is used in aqueous solution and the concentration is in the range of 0.1 to 10% by weight.

4. A process according to Claim 1, **characterised in that** the contacting of the sulphuryl fluoride and the hydrogen peroxide or the precursor thereof is effected at a temperature of 0 to +40°C.

5. A process according to Claim 1, **characterised in that** sulphuryl fluoride which contains sulphur dioxide (SO₂) and/or elemental fluorine and/or chlorine is purified.

6. A process according to Claim 1, **characterised in that** sulphuryl fluoride which additionally contains HF and/or HCI is purified.

## Revendications

1. Procédé de préparation de fluorure de sulfuryle purifié (SO₂F₂), dans lequel on met en contact le fluorure de sulfuryle à purifier avec du peroxyde d'hydrogène ou un précurseur de celui-ci.

2. Procédé selon la revendication 1, **caractérisé en ce que** l'on effectue la mise en contact avec une solution aqueuse de peroxyde d'hydrogène.

3. Procédé selon la revendication 1 ou 2, **caractérisé en ce que** l'on utilise du peroxyde d'hydrogène ou un précurseur de celui-ci dans une solution aqueuse, et **en ce que** la concentration est comprise dans la gamme allant de 0,1 à 10 % en poids.

4. Procédé selon la revendication 1, **caractérisé en ce que** l'on réalise la mise en contact du fluorure de sulfuryle avec le peroxyde d'hydrogène ou d'un précurseur de celui-ci à une température comprise entre 0 et + 40 °C.

5. Procédé selon la revendication 1, **caractérisé en ce que** l'on purifie du fluorure de sulfuryle qui contient du dioxyde de soufre (SO₂) et/ou du fluor et/ou du chlore élémentaire.

6. Procédé selon la revendication 1, **caractérisé en ce que** l'on purifie du fluorure de sulfuryle qui contient en outre HF et/ou HCl.
